(19) **Europäisches Patentamt**
**European Patent Office**
**Office européen des brevets**

(11) **EP 1 279 259 B1**

(12) **EUROPEAN PATENT SPECIFICATION**

(45) Date of publication and mention
of the grant of the patent:
**25.07.2007 Bulletin 2007/30**

(51) Int Cl.:
*H04L 12/56* (2006.01)    *H04Q 7/20* (2006.01)

(21) Application number: **01924050.6**

(22) Date of filing: **12.04.2001**

(86) International application number:
**PCT/SE2001/000833**

(87) International publication number:
**WO 2001/082536 (01.11.2001 Gazette 2001/44)**

(54) **DEVICE AND METHOD FOR MEASURING AND PROCESSING OF INFORMATION IN A PACKET ORIENTATED COMMUNICATION SYSTEM**

EINRICHTUNG UND VERFAHREN ZUM MESSEN UND VERARBEITEN VON INFORMATIONEN IN EINEM PAKETORIENTIERTEN KOMMUNIKATIONSSYSTEM

DISPOSITIF ET PROCEDE DE MESURE ET DE TRAITEMENT DE DONNEES DANS UN SYSTEME DE COMMUNICATION ORIENTE PAQUETS

(84) Designated Contracting States:
**AT BE CH CY DE DK ES FI FR GB GR IE IT LI LU MC NL PT SE TR**
Designated Extension States:
**LT LV**

(30) Priority: **26.04.2000 SE 0001487**

(43) Date of publication of application:
**29.01.2003 Bulletin 2003/05**

(73) Proprietor: **Telia AB (publ)**
**123 86 Farsta (SE)**

(72) Inventor: **ERIKSSON, Jonas**
**S-652 22 Karlstad (SE)**

(74) Representative: **Hopfgarten, Nils et al**
**L.A. Groth & Co. KB**
**P.O. Box 6107**
**102 32 Stockholm (SE)**

(56) References cited:
**EP-A2- 1 021 017**      **WO-A1-00/31963**
**US-A- 6 021 117**

• **ETSI EN 301 349 V8.4.1 (200-10), "Digital cellular telecommunications system (Phase 2+); General Packet Radio Service (GPRS); Mobile Station (MS) - Base Station System (BSS) interface; Radio Link Control/ Medium Access Control (RLC/MAC) protocol (GSM 04.60 version 8.4.1 Release 1999)", pages 18, 33-45, 50-70, 88-106, XP002943782**

**Description**

TECHNICAL FIELD

The invention relates to a device and method for measuring and processing of information in a packet orientated communication system. More exactly is related to a method and a measuring tool for use in a wireless cellular telecommunication and data communication system including a GPRS-network and which makes possible measuring, the result of which can be used i.a. to minimize the time required for change of cell, cell re-selection, in said network.

BACKGROUND

Transmission of data in a communication network can be arranged by circuit-switching or packet-switching. Circuit switched transmission of data means that users reserves and get access to a certain bandwidth and transmission speed. Existing wireless systems, for instance GSM (Global System for Mobile communication), which primarily are developed for transmission of speech, are circuit switched. Irrespective of how much data that are transmitted, the whole bandwidth is available as long as the connection is set up. It is stable and reliable, but does not utilize the resources of the network very efficiently.

Packet switching of data means that the information that shall be transmitted is divided into data packets. If there are a lot of data to be transmitted, a large bandwidth is required, and vice versa. The packets, which can be of various sizes, are transmitted as soon as it is possible. One example of a packet switching service is GPRS (General Packet Radio Services), and it is based on GSM. In contrast to circuit switching services, GPRS is only active when it is needed. Because GPRS is based on packet switching technology, available network resources can be better utilized for transmission of data which do not need to be transmitted in real time.

GPRS goes well with other packet switching services, for instance all Internet services which utilize the packet protocol TCP/IP. GPRS, however, is adapted to radio communication with mobile stations. Like GSM, a GPRS network consequently includes a plurality of base stations which are interconnected in a fixed network. Each base station has coverage for radio communication with mobile stations within an area called cell, and these cells overlap each other so that a mobile station can move from one cell to another without risk of loosing contact with the fixed network. The cells also can be hierarchically arranged, at which a big cell includes a number of smaller cells.

To get a satisfactory quality of the communication between a mobile station and the fixed network is required that one sometimes changes cell. Usually it is the mobile station that changes cell as a consequence of that the mobile station has been moved, but in principle also the fixed network can change cell if the contact between an existing base station and a mobile station is regarded as inferior. If the mobile station is in a place which also is covered by a second base station, it is conceivable to change base station to get a higher quality of the communication. If change of cell is made during transmission of data, this, however, results in an interruption in the data communication between the fixed network and the mobile station, which of course is not wanted. If there is not enough time to have all data transmitted/ transferred before the interruption, it, however, will be possible to establish a new data flow communication with the new base station in order to complete the transmission. For GPRS the efficient data transmission speed will depend on i.a. how often MS (Mobile Station) changes cell, i.e. cell re-selection, and how fast the procedures which are connected to this are performed. The present invention therefore aims at providing a method and a tool which make measurements possible, the results of which can be used to minimize the time that is needed for cell re-selection, for example via optimization of parameters.

D1=US-A-6 021 117 discloses a system for parameter analysis and traffic monitoring in a ATM network, but the foregoing problem is not addressed.

SUMMARY OF THE INVENTION

The present invention consequently relates to a device for measuring and processing of information in a communication system which includes a packet switching communication network, in which communication network a base station is arranged to cover a cell, and a mobile station which can communicate wirelessly with said base station within said cell for transmission of data packets in a temporary block flow. The device is characterized in a test unit including:

- measuring device adapted to measuring of the value of a first parameter during said transmission of data packets in a first block flow, and for measuring of the value of a second parameter between the first block flow and a second block flow;
- storing device adapted to storing of measurement values of said parameters;
- calculation device adapted to calculation of ratios depending on said measurement values. The measuring device is preferably arranged in one for the purpose especially arranged test mobile.

Further, the invention relates to a method for measuring and processing of information in a communication system as above, which method is characterized in the steps to:

- establish a first temporary block flow, and start measuring of a first parameter when the transmission of data packets is started;
- finish the measuring of the first parameter when the first block flow has been finished/stopped, and at that start measuring of a second parameter;
- establish a second temporary block flow, and at that finish the measuring of the second parameter;
- store the measuring values of the first and second parameters;
- calculate a ratio depending on said measuring values

BRIEF DESCRIPTION OF THE DRAWINGS

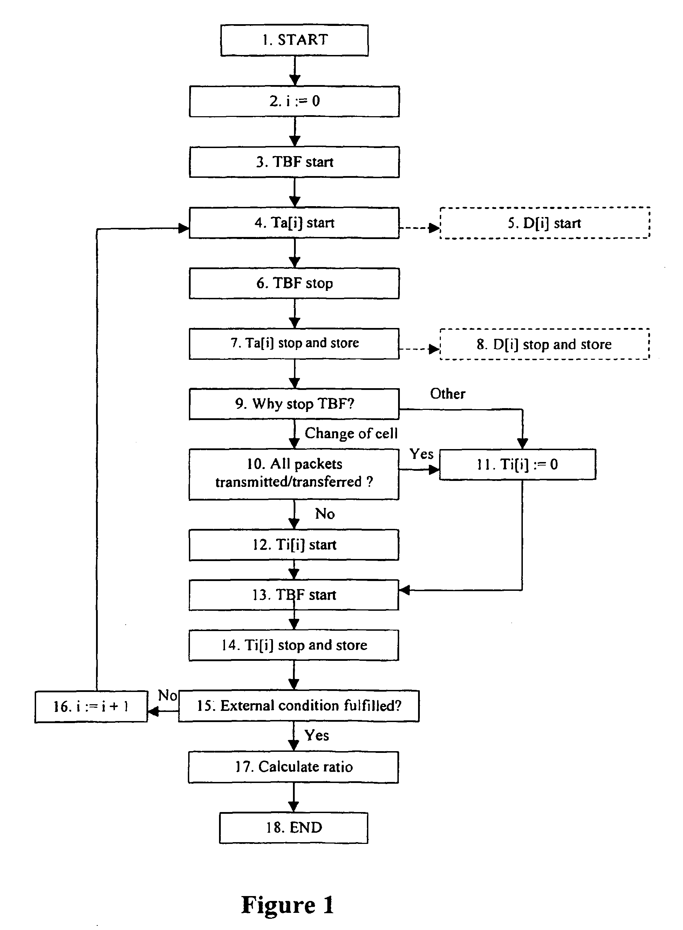

Preferred embodiments of the invention are described in detail below, with reference to the only figure, at which
Figure 1 shows a flow chart of a preferred procedure according to the invention.

DETAILED DESCRIPTION OF PREFERRED EMBODIMENTS

The invention relates to a device and a procedure for measuring and processing of information in a communication network which is adapted to packet switching services, for instance GPRS.
According to the invention, a test unit includes a measuring device which is used to measure the time of transmission of data between a mobile station and the fixed network. For transmission of one or more LLC PDU (Logical Link Control Protocol Data Unit), in this application called data packets, between a mobile station MS and the fixed network, a temporary block flow, TBF (Temporary Block Flow) is established. TBF is finished when all data packets have been transmitted, but can also be finished/stopped prematurely for other reasons. For instance can cell re-selection cause interruption in TBF.
The test unit also includes a storing device, which for instance can be an optical or magnetic disk memory, or a simple memory circuit, for storing of parameter values which said device has measured.
With the aim to find out the reason why TBF has been finished/stopped, the test unit further includes one for that purpose adapted detecting device. This detecting device includes first detection means adapted to detect if a block flow has been prematurely interrupted, and if all data packets in the block flow have been transmitted/transferred. Further, the detection device includes second detection means adapted to, for a prematurely interrupted block flow, detect what has caused the interruption. When a TBF has been finished/stopped, the test unit decides, based on the detected reason for TBF having been finished/stopped, if the time shall be measured until a new TBF is established. If the detected reason is a change of cell, and it at the same time is detected that not all data packets in TBF have been correctly transmitted/transferred, the measuring device also measures the time from the interruption of the first TBF to the start of next TBF. Also this parameter value is stored in said storing device.
Further, the test unit includes a calculation device adapted to processing of the in the storing device stored data. The calculation device is, for instance, adapted to generate a ratio between time for data transmission and time for change of cell, a ratio which is very useful at network optimization. The calculation device can also be used to make a comparative measuring of, for example, an average data speed for just any measuring interval, where the time for change of cell is included respective excluded.
In a preferred embodiment of the device according to the invention, the test unit is arranged in a mobile station MS, which is adapted to communication in the packet switching communication network. This MS then constitutes an especially adapted test-MS, adapted to collect and process data according to the above from different places within the coverage area of the network. In another embodiment, the test unit is integrated in the fixed network, arranged to detect signals from a plurality of base stations and at that detect changes of cell for mobile stations.
In Figure 1 is illustrated in a flow chart the principle of a preferred procedure of the invention. The flow relates to both collection and processing of data. When a measuring block is started (1) a measuring series index i is set to a start value (2), for instance the value 0. When a first TBF starts (3), the measuring device is triggered to start measuring (4) of active time $Ta\ [i]$ for the measuring series i. By active time is consequently meant the time during which data is transmitted in a TBF. When TBF is finished/stopped (6), the measuring device stops the measuring of the active time (7), and the test unit stores the measured parameter value $Ta\ [i]$ in the storing device.
When TBF is finished/stopped, the detection device of the test unit also checks why TBF has been finished/stopped (9). In the preferred embodiment is at that first checked if it is a change of cell that has caused the interruption in the communication. If that is the case, is after that checked if there after all has been time enough for all data packets to be transmitted/transferred correctly (10). If the transmission has not been finished correctly, measuring of inactive time $Ti\ [i]$ starts for the measuring series (12). By inactive time is meant the time from the point of time of interruption (6) of a first interrupted TBF, to the starting point of time (13) for a second TBF, during which the second TBF is finished. If other reason than change of cell has caused that said first TBF has been finished/stopped, the value of the inactive time Ti [i] is set to 0 (11). This is also done if all data packets have been correctly transmitted/transferred in one by change of cell interrupted TBF, but it can in certain cases be difficult to identify this case for downlink TBF. This can for instance be solved by a timer arranged in the test unit deciding when no new TBF will be initiated from the network, at which the conclusion can be made that there are no remaining data packets to be transmitted. When the timer expires, the Ti [i] is set = 0.

When a second TBF starts (13), the counting of the inactive time Ti [i] is stopped, and the measured parameter value is saved in the storing device (14). The stored parameter value of Ti [i] consequently is either the measured time between said first and second TBF, or 0.

When parameter values for both active and inactive time have been stored for a measuring series, the test unit checks if an external condition is fulfilled (15). This can, for instance, be that a preset number of measuring series have been finished. If the external condition has not been fulfilled, the measurement series index is stepped up one step, (16) after which a new measurement series consequently starts by measuring of active time Ta [i+1] (4) from the starting point of time of said second TBF (13). This second measurement series i+1 proceeds in the same way as the first series i, and after that is checked again if an external condition has been fulfilled (15).

When an external condition for finishing the measuring has been fulfilled, the calculation device of the test unit calculates preset ratios (17), by means of the in the storing device stored parameter values. The calculation device is preferably arranged to calculate the ratio of a second parameter, that is inactive time, and a first parameter, that is active time. This can be done for each measurement series, but also for the whole measurement block, which includes all measurement series from start of the measurement block (1). For a complete measuring block, with first measurement series index = 0, a ratio consequently is

$$\Sigma(Ti[x], x=0..i)/\Sigma(Ta[x], x=0..i).$$

When the calculation device has calculated preset ratios, the measuring block (18) is finished.

In one embodiment where the test unit is arranged to calculate a ratio which is based on the amount of transmitted data during TBF, the procedure is extended by the measuring device at start of a TBF (3) also starts measuring of a third parameter D[i] (5). That this measurement represents an alternative embodiment is indicated in the figure by dashed edge lines and arrows. This third parameter D[i] can be the number of transmitted/transferred bits (for instance RLC-data, RLC = Radio Link Control). The measurements D[i] are stopped and are stored (8) when TBF is finished (6). The transmitted/transferred bits that are measured need not include all RLC-data. It will, for instance, be possible to chose to exclude header information from certain overlaying protocols. The total amount of transmitted data can be used for calculation of average data speed with and without change of cell. This type of comparing measuring is also very useful at network optimization.

In this embodiment, the calculation device is preferably arranged to calculate ratios based on the values of all three parameters. For a whole measurement block is consequently calculated:

Average data speed excl. time for change of cell:

$$\Sigma(D[x], x=0..i)/\Sigma(Ta[x], x=0..i).$$

Average data speed incl. time for change of cell:

$$\Sigma(D[x], x=0..i)/\{\Sigma(Ta[x], x=0..i) + \Sigma(Ti[x], x=0..i)\}$$

In a preferred embodiment of the invention, the process steps are realized according to the flow chart in Figure 1 of a computer program product which includes a storing medium. Said storing medium can for instance be an optical or magnetic disk memory, or a hard disk. The computer program product is at that adapted to be used with a computer system that includes a processor, a memory device and an input and output device. According to a preferred embodiment, the computer program product includes devices stored on said storing medium, for control of the computer system to perform each of the process steps which have been described with reference to Figure 1.

Embodiments of the invention are useful within several different fields of application. Some examples are:

- performance evaluation of different parameter settings in test environment;
- performance evaluation of different parameter settings for GPRS in the GSM-network, for instance hierarchical cell grouping;
- to, with the aim of optimization, compare data speed between areas (which can have different cell structure), without the results being influenced by the number of change of cells;
- to evaluate possible efficiency losses/gains with network initiated change of cells; and
- evaluation whether low data speed in an area depends on cell structure/parameter setting.

It is to the expert in the field obvious that a plurality of variants and modifications of the described embodiments can be conceived, for instance to measure other parameters and to calculate other types of ratios, without for that reason land up outside the scope of the invention, which is only limited by the patent claims below.

**Claims**

1. Device for measuring and processing of information in a communication system which includes a packet orientated communication network, in which communication network a base station is arranged to cover a cell, and a mobile station which can communicate wirelessly with said base station within said cell for transmission of data packets in a temporary block flow, **characterized in** a test unit including:

   - measuring device adapted to measuring the value of a first parameter during said transmission of data packets in a first block flow, and for measuring the value of a second parameter between the first block flow and a second block flow.
   - storing device adapted to storing of measuring values of said parameters;
   - calculation device adapted to calculation of ratios depending on said measuring values.

2. Device as claimed in claim 1, where said test unit is arranged in said mobile station.

3. Device as claimed in claim 1, where said test unit is arranged in said base station.

4. Device as claimed in claim 2 or 3, including detection device which has

   - first detection means to detect if a block flow has been interrupted prematurely, and if all data packets in the block flow have been transmitted/transferred;
   - second detection means to, for a prematurely interrupted block flow, detect the cause of the interruption.

5. Device as claimed in claim 4, where said calculation device is arranged to give said second parameter a preset parameter value depending on said detection device.

6. Device as claimed in claim 5, where said second detection means is arranged to detect if an interruption in a block flow has been caused by a change of cell for the communication, and where said calculation device is arranged to give said second parameter the parameter value zero if the second detection means has detected other cause than change of cell for the interruption of the block flow.

7. Device as claimed in claim 6, where said calculation device is arranged to give said second parameter the parameter value zero if the second detection means has detected that an interruption in a block flow has been caused by a change of cell, and if, in addition, said first detection means has detected that all data packets in the block flow have been transferred/transmitted.

8. Device as claimed in any of the previous claims, including an indexing device arranged to give the measuring values of said first and second parameters a first index for a first measuring series, and to step up index by one step to a second measuring series, corresponding with the first measuring series, with start at said second block flow.

9. Device as claimed in any of the previous claims, where said measuring device includes a timer, at which the first parameter is active block flow time, and the second parameter is inactive block flow time.

10. Device as claimed in claim 9, where said ratio is the ratio between inactive and active block flow time.

**11.** Device as claimed in claim 8, in combination with claim 9, where said ratio is the ratio between the sum of inactive block flow time for different measuring series, and the sum of active block flow time for said measuring series.

**12.** Device as claimed in claim 9, where said measuring device includes a bit counter arranged to count transmitted/ transferred bits of preset type in a block flow, at which a third parameter is transmitted/transferred amount of data.

**13.** Device as claimed in claim 12, where said ratio is the ratio between transmitted/transferred amount of data and active block flow time.

**14.** Device as claimed in claim 8, in combination with claim 12, where said ratio is the ratio between the sum of transmitted/ transferred amount of data for different measuring series, and the sum of inactive and active block flow time of said measuring series.

**15.** Method for measuring and processing of information in a communication system which includes a packet orientated communication network, in which communication network a base station is arranged to cover a cell, and a mobile station which can communicate wirelessly with said base station within said cell for transmission/transfer of data packets in a temporary block flow,
**characterized in** the steps to

- establish a first temporary block flow, and start measuring of a first parameter when the transmission/transfer of data packets is started;
- finish the measuring of the first parameter when the first block flow has been finished, and at that start measuring of a second parameter;
- establish a second temporary block flow, and at that finish the measuring of the second parameter;
- store the measuring values of the first and second parameter;
- calculate a ratio depending on said measuring values.

**16.** Method as claimed in claim 15, including the steps to:

- detect if a block flow has been interrupted prematurely;
- detect if all data packets in the block flow have been transmitted/transferred at the interruption;
- detect the cause of the interruption of a prematurely interrupted block flow.

**17.** Method as claimed in claim 16, including the steps to:

- give said second parameter a preset parameter value depending on said detections.

**18.** Method as claimed in claim 17, including the steps to:

- detect if an interruption in a block flow has been caused by a change of cell for the communication;
- give said second parameter the parameter value zero if other cause than change of cell for the interruption of the block flow has been detected.

**19.** Method as claimed in claim 18, including the steps to:

- give said second parameter the parameter value zero if it has been detected that an interruption in a block flow has been caused by a change of cell, and if it, in addition, has been detected that all data packets in the block flow have been transmitted/transferred.

**20.** Method as claimed in any of the claims 17-19, including the steps to:

- give the measuring values of said first and second parameters a first index for a first measurement series:
- step up index by one step:
- start a second series of measuring, corresponding to the first series, at the start of said second block flow.

**21.** Method as claimed in any of the claims 17-20, including the steps to:

- for the first parameter measure active block flow time, and

- for the second parameter measure inactive block flow time.

22. Method as claimed in claim 21, including the steps to:

- calculate the ratio between inactive and active block flow time to get said ratio.

23. Method as claimed in claim 20, in combination with claim 21, including the steps to:

- calculate the ratio between the sum of inactive block flow time for different measuring series, and the sum of active block flow time for said measuring series to get said ratio.

24. Method as claimed in claim 21, including the steps to:

- calculate transmitted/transferred bits of preset type in a block flow, at which a third parameter is transmitted/transferred amount of data.

25. Method as claimed in claim 24, including the steps to:

- calculate the ratio between transmitted/transferred amount of data and active block flow time to get said ratio.

26. Method as claimed in claim 20, in combination with claim 24, including the steps to:

- calculate the ratio between the sum of transmitted/transferred amount of data of different measuring series, and the sum of inactive and active block flow time for said measuring series to get said ratio.

27. A computer program product for use with a computer system in a communication system, at which the communication system includes a packet orientated communication network where a base station is arranged to cover a cell, and a mobile station which can communicate wirelessly with said base station within said cell for transmission of data packets in a temporary block flow, and where said computer program product includes a storing medium, **characterized in** devices, stored on said storing medium, for control of the computer system to perform each of the method steps as claimed in claims 15-26.

**Patentansprüche**

1. Einrichtung zum Messen und Verarbeiten von Information in einem Kommunikationssystem, das ein paketorientiertes Kommunikationsnetz, in welchem Kommunikationsnetz eine Basisstation dazu ausgebildet ist, eine Zelle abzudecken, und eine mobile Station einschließt, die drahtlos mit der Basisstation innerhalb der Zelle für Übertragung von Datenpaketen in einem zeitweiligen Blockfluss kommunizieren kann, **gekennzeichnet durch** eine Prüfeinheit, die einschließt:

- Messeinrichtung, die dazu ausgebildet ist, den Wert eines ersten Parameters während der Übertragung der von Datenpaketen in dem ersten Blockfluss zu messen, und zum Messen des Wertes eines zweiten Parameters zwischen dem ersten Blockfluss und einem zweiten Blockfluss;
- Speichereinrichtung, die dazu ausgebildet ist, die Messwerte der Parameter zu speichern;
- Berechnungseinrichtung, die zum Berechnen von Verhältnissen ausgebildet ist, die von den Messwerten abhängen.

2. Einrichtung nach Anspruch 1, wo die Prüfeinheit in der mobilen Station angeordnet ist.

3. Einrichtung nach Anspruch 1, wo die Prüfeinheit in der Basisstation angeordnet ist.

4. Einrichtung nach Anspruch 2 oder 3, die eine Detektionseinrichtung einschließt, die

- erste Detektionsmittel hat, zu ermitteln, ob ein Blockfluss vorzeitig unterbrochen worden ist und ob alle Datenpakete im Blockfluss gesendet/übertragen worden sind;
- zweite Detektionsmittel hat, um für einen vorzeitig unterbrochenen Blockfluss die Ursache der Unterbrechung zu ermitteln.

5. Einrichtung nach Anspruch 4, wo die Berechnungseinheit dazu ausgebildet ist, dem zweiten Parameter einen voreingestellten Parameterwert in Abhängigkeit von der Detektionseinrichtung zu geben.

6. Einrichtung nach Anspruch 5, wo die zweiten Detektionsmittel dazu ausgebildet sind, zu ermitteln, ob eine Unterbrechung in einem Blockfluss durch einen Wechsel der Zelle für die Kommunikation bewirkt worden ist, und wo die Berechnungseinrichtung dazu ausgebildet ist, dem zweiten Parameter dem Parameterwert Null zu geben, wenn die zweiten Detektionsmittel eine andere Ursache als Wechsel der Zelle für die Unterbrechung des Blockflusses ermittelt haben.

7. Einrichtung nach Anspruch 6, wo die Berechnungseinrichtung dazu ausgebildet ist, dem zweiten Parameter den Wert Null zu geben, wenn die zweiten Detektionsmittel ermittelt haben, dass eine Unterbrechung in einem Blockfluss durch einen Wechsel der Zelle verursacht worden ist und wenn zusätzlich die ersten Detektionsmittel ermittelt haben, dass alle Datenpakete in dem Blockfluss übertragen/gesendet worden sind.

8. Einrichtung nach einem der vorangehenden Ansprüche, die eine Indexiereinrichtung einschließt, die dazu ausgebildet ist, den Messwerten der ersten und zweiten Parameter einen ersten Index für eine erste Messreihe zu geben und den Index um einen Schritt zu einer zweiten Messreihe hochzuschalten, die der ersten Messreihe entspricht, mit Beginn bei dem zweiten Blockfluss.

9. Einrichtung nach einem der vorangehenden Ansprüche, wo die Messeinrichtung einen Zeitnehmer einschließt, bei dem der erste Parameter aktive Blockflusszeit ist und der zweite Parameter inaktive Blockflusszeit ist.

10. Einrichtung nach Anspruch 9, wo das Verhältnis das Verhältnis zwischen inaktiver und aktiver Blockflusszeit ist.

11. Einrichtung nach Anspruch 8 in Kombination mit Anspruch 9, wo das Verhältnis das Verhältnis zwischen der Summe von inaktiver Blockflusszeit für unterschiedliche Messreihen und der Summe von aktiver Blockflusszeit für die Messreihen ist.

12. Einrichtung nach Anspruch 9, wo die Messeinrichtung einen Bitzähler einschließt, der dazu ausgebildet ist, gesendete/übertragene Bits von voreingestelltem Typ in einem Blockfluss zu zählen, wobei ein dritter Parameter gesendete/übertragene Datenmenge ist.

13. Einrichtung nach Anspruch 12, wo das Verhältnis das Verhältnis zwischen gesendeter/übertragener Datenmenge und aktiver Blockflusszeit ist.

14. Einrichtung nach Anspruch 8 in Kombination mit Anspruch 12, wo das Verhältnis das Verhältnis zwischen der Summe von gesendeter/übertragener Datenmenge für unterschiedliche Messreihen und der Summe von inaktiver und aktiver Blockflusszeit der Messreihen ist.

15. Verfahren zum Messen und Verarbeiten von Information in einem Kommunikationssystem, das ein paketorientiertes Kommunikationsnetz, in welchem Kommunikationsnetz eine Basisstation ausgebildet ist, eine Zelle abzudecken, und eine Mobilstation einschließt, die drahtlos mit der Basisstation innerhalb der Zelle zum Senden/Übertragen von Datenpaketen in einem zeitweiligen Blockfluss kommunizieren kann, **gekennzeichnet durch** die Schritte,

    - einen ersten zeitweiligen Blockfluss einzurichten und das Messen eines ersten Parameters zu beginnen, wenn das Senden/die Übertragung von Datenpaketen begonnen wird;
    - das Messen des ersten Parameters zu beenden, wenn der erste Blockfluss beendet worden ist, und dabei zu beginnen, einen zweiten Parameter zu messen;
    - einen zweiten temporären Blockfluss einzurichten und dabei die Messung des zweiten Parameters zu beenden;
    - die Messwerte der ersten und zweiten Parameter zu speichern;
    - ein Verhältnis in Abhängigkeit von den Messwerten zu berechnen.

16. Verfahren nach Anspruch 15, das die Schritte aufweist,

    - zu ermitteln, ob ein Blockfluss vorzeitig unterbrochen ist;
    - zu ermitteln, ob alle Daten im Blockfluss bei der Unterbrechung gesendet/übertragen worden sind;
    - die Ursache der Unterbrechung eines vorzeitig unterbrochenen Blockflusses zu ermitteln.

**17.** Verfahren nach Anspruch 16, das die Schritte aufweist:

- dem zweiten Parameter einen vorgestellten Parameterwert in Abhängigkeit von den Ermittlungen zu geben.

**18.** Verfahren nach Anspruch 17, das die Schritte einschließt:

- zu ermitteln, ob eine Unterbrechung in einem Blockfluss durch einen Wechsel der Zelle für die Kommunikation bewirkt worden ist;
- dem zweiten Parameter den Parameterwert Null zu geben, wenn eine andere Ursache als Wechsel der Zelle für die Unterbrechung des Blockflusses ermittelt worden ist.

**19.** Verfahren nach Anspruch 18, das die Schritte aufweist,

- dem zweiten Parameter den Parameterwert Null zu geben, wenn ermittelt worden ist, dass eine Unterbrechung in einem Blockfluss durch einen Wechsel der Zelle verursacht worden ist, und falls zusätzlich ermittelt worden ist, dass alle Datenpakete im Blockfluss gesendet/übertragen worden sind.

**20.** Verfahren nach einem der Ansprüche 17-19, das die Schritte einschließt:

- den Messwerten der ersten und zweiten Parameter einen ersten Index für eine erste Messreihe zu geben;
- Index um eine Stufe hochzuschalten;
- eine zweite Messreihe, die der ersten Reihe entspricht, beim Start des zweiten Blockflusses zu beginnen.

**21.** Verfahren nach einem der Ansprüche 17-20, das die Schritte einschließt:

- für den ersten Parameter aktive Blockflusszeit zu messen und
- für den zweiten Parameter inaktive Blockflusszeit zu messen.

**22.** Verfahren nach Anspruch 21, das die Schritte einschließt:

- das Verhältnis zwischen inaktiver und aktiver Blockflusszeit zu berechnen, um das Verhältnis zu erhalten.

**23.** Verfahren nach Anspruch 20 in Kombination mit Anspruch 21, das die Schritte aufweist:

- das Verhältnis zwischen der Summe von inaktiver Blockflusszeit für unterschiedliche Messreihen und der Summe von aktiver Blockflusszeit für die Messreihen zu berechnen, um das Verhältnis zu erhalten.

**24.** Verfahren nach Anspruch 21, das die Schritte aufweist:

- gesendete/übertragene Bits von voreingestelltem Typ in einem Blockfluss zu berechnen, wobei ein dritter Parameter gesendete/übertragene Datenmenge ist.

**25.** Verfahren nach Anspruch 24, das die Schritte aufweist:

- das Verhältnis zwischen gesendeten/übertragener Datenmenge und aktiver Blockflusszeit zu berechnen, um das Verhältnis zu erhalten.

**26.** Verfahren nach Anspruch 20 in Kombination mit in Anspruch 24, das die Schritte aufweist:

- das Verhältnis zwischen der Summe von gesendeter/übertragener Datenmenge unterschiedlicher Messreihen und der Summe von inaktiver und aktiver Blockflusszeit für die Messreihen zu berechnen, um das Verhältnis zu erhalten.

**27.** Computerprogrammprodukt für Verwendung in einem Computersystem in einem Kommunikationssystem, wobei das Kommunikationssystem ein paketorientiertes Kommunikationsnetz, wo eine Basisstation dazu ausgebildet ist, eine Zelle abzudecken, und eine mobile Station einschließt, die drahtlos mit der Basisstation innerhalb der Zelle für Übertragung von Datenpakten in einem zeitweiligen Blockfluss kommunizieren kann, und wo das Computerprogrammprodukt ein Speichermedium einschließt, **gekennzeichnet durch** Einrichtungen, die auf dem Speichermedium für Steuerung des Computersystems gespeichert sind, um jeden der Verfahrensschritte auszuführen, wie er in den Ansprüchen 15-26 beansprucht worden ist.

**Revendications**

1. Dispositif de mesure et de traitement d'informations dans un système de communication qui comprend un réseau de communication orienté paquet, dans lequel réseau de communication une station de base est agencée pour couvrir une cellule, et une station mobile qui peut communiquer sans fil avec ladite station de base dans ladite cellule pour la transmission de paquets de données dans un flux de blocs temporaire, **caractérisé par** une unité d'essai comprenant :

   - un dispositif de mesure adapté pour mesurer la valeur d'un premier paramètre pendant ladite transmission de paquets de données dans un premier flux de bloc, et pour mesurer la valeur d'un second paramètre entre le premier flux de blocs et un second flux de blocs ;
   - un dispositif de stockage adapté pour stocker des valeurs de mesure desdits paramètres ;
   - un dispositif de calcul adapté pour calculer des rapports en fonction desdites valeurs de mesure.

2. Dispositif selon la revendication 1, où ladite unité d'essai est agencée dans ladite station mobile.

3. Dispositif selon la revendication 1, où ladite unité d'essai est agencée dans ladite station de base.

4. Dispositif selon la revendication 2 ou 3, comprenant un dispositif de détection qui comporte

   - un premier moyen de détection pour détecter si un flux de blocs a été interrompu prématurément, et si tous les paquets de données dans le flux de blocs ont été transmis/transférés ;
   - un second moyen de détection, pour un flux de blocs prématurément interrompu, pour détecter la cause de l'interruption.

5. Dispositif selon la revendication 4, où ledit dispositif de calcul est agencé pour donner audit second paramètre une valeur de paramètre préréglée en fonction dudit dispositif de détection.

6. Dispositif selon la revendication 5, où ledit second moyen de détection est agencé pour détecter si une interruption dans un flux de blocs a été produite par un changement de cellule pour la communication, et où ledit dispositif de calcul est agencé pour donner audit second paramètre la valeur de paramètre zéro si le second moyen de détection a détecté une cause autre qu'un changement de cellule pour l'interruption du flux de blocs.

7. Dispositif selon la revendication 6, où ledit dispositif de calcul est agencé pour donner audit second paramètre la valeur de paramètre zéro si le second moyen de détection a détecté qu'une interruption dans un flux de blocs a été produite par un changement de cellule, et si, en outre, ledit premier moyen de détection a détecté que tous les paquets de données dans le flux de blocs ont été transférés/transmis.

8. Dispositif selon l'une quelconque des revendications précédentes, comprenant un dispositif d'indexation agencé pour donner aux valeurs de mesure desdits premier et second paramètres un premier index pour une première série de mesures, et pour remonter l'index d'un échelon à une seconde série de mesures, correspondant à la première série de mesures, avec un commencement audit second flux de blocs.

9. Dispositif selon l'une quelconque des revendications précédentes, où ledit dispositif de mesure comprend une minuterie, où le premier paramètre est un temps de flux de blocs actif et le second paramètre est un temps de flux de blocs inactif.

10. Dispositif selon la revendication 9, où ledit rapport est le rapport entre le temps de flux de blocs inactif et actif.

11. Dispositif selon la revendication 8, en combinaison avec la revendication 9, où ledit rapport est le rapport entre la somme du temps de flux de blocs inactif pour différentes séries de mesures, et la somme du temps de flux de blocs actif pour lesdites séries de mesures.

12. Dispositif selon la revendication 9, où ledit dispositif de mesure comprend un compteur de bits agencé pour compter les bits transmis/transférés du type préréglé dans un flux de blocs, où un troisième paramètre est une quantité de données transmise/transférée.

13. Dispositif selon la revendication 12, où ledit rapport est le rapport entre une quantité de données transmise/transférée et un temps de flux de blocs actif.

14. Dispositif selon la revendication 8, en combinaison avec la revendication 12, où ledit rapport est le rapport entre la somme d'une quantité de données transmise/transférée pour différentes séries de mesures, et la somme d'un temps de flux de blocs inactif et actif desdites séries de mesures.

15. Procédé de mesure et de traitement d'informations dans un système de communication qui comprend un réseau de communication orienté paquet, dans lequel réseau de communication une station de base est agencée pour couvrir une cellule, et une station mobile qui peut communiquer sans fil avec ladite station de base dans ladite cellule pour la transmission/le transfert de paquets de données dans un flux de blocs temporaire, **caractérisé en ce que** les étapes consistant à

- établir un premier flux de blocs temporaire et commencer la mesure d'un premier paramètre lorsque la transmission/le transfert de paquets de données est commencé ;
- finir la mesure du premier paramètre lorsque le premier flux de blocs a été fini, et à cela commencer la mesure d'un second paramètre ;
- établir un second flux de blocs temporaire, et à cela finir la mesure du second paramètre ;
- stocker les valeurs de mesure du premier et du second paramètre ;
- calculer un rapport en fonction desdites valeurs de mesure.

16. Procédé selon la revendication 15, comprenant les étapes consistant à :

- détecter si un flux de blocs a été interrompu prématurément ;
- détecter si tous les paquets de données dans le flux de blocs ont été transmis/transférés au moment de l'interruption;
- détecter la cause de l'interruption d'un flux de blocs prématurément interrompu.

17. Procédé selon la revendication 16, comprenant l'étape consistant à :

- donner audit second paramètre une valeur de paramètre préréglée en fonction desdites détections.

18. Procédé selon la revendication 17, comprenant les étapes consistant à :

- détecter si une interruption dans un flux de blocs a été produite par un changement de cellule pour la communication ;
- donner audit second paramètre la valeur de paramètre zéro si une cause autre qu'un changement de cellule pour l'interruption du flux de blocs a été détectée.

19. Procédé selon la revendication 18, comprenant l'étape consistant à :

- donner audit second paramètre la valeur de paramètre zéro s'il a été détecté qu'une interruption dans un flux de blocs a été produite par un changement de cellule, et, en outre, s'il a été détecté que tous les paquets de données dans le flux de blocs ont été transmis/transférés.

20. Procédé selon l'une quelconque des revendications 17 à 19, comprenant les étapes consistant à :

- donner aux valeurs de mesure desdits premier et second paramètres un premier index pour une première série de mesures ;
- remonter l'index d'un échelon ;
- commencer une seconde série de mesures, correspondant à la première série, au commencement dudit second flux de blocs.

21. Procédé selon l'une quelconque des revendications 17 à 20, comprenant les étapes consistant à :

- pour le premier paramètre mesurer un temps de flux de blocs actif, et
- pour le second paramètre mesurer un temps de flux de blocs inactif.

**22.** Procédé selon la revendication 21, comprenant l'étape consistant à:

- calculer le rapport entre un temps de flux de blocs inactif et actif pour obtenir ledit rapport.

**23.** Procédé selon la revendication 20, en combinaison avec la revendication 21, comprenant l'étape consistant à :

- calculer le rapport entre la somme d'un temps de flux de blocs inactif pour différentes séries de mesure, et la somme d'un temps de flux de blocs actif pour lesdites séries de mesures pour obtenir ledit rapport.

**24.** Procédé selon la revendication 21, comprenant l'étape consistant à :

- calculer les bits transmis/transférés du type préréglé dans un flux de blocs, où un troisième paramètre est une quantité de données transmise/transférée.

**25.** Procédé selon la revendication 24, comprenant l'étape consistant à :

- calculer le rapport entre la quantité de données transmise/transférée et un temps de flux de blocs actif pour obtenir ledit rapport.

**26.** Procédé selon la revendication 20, en combinaison avec la revendication 24, comprenant l'étape consistant à :

- calculer le rapport entre la somme d'une quantité de données transmise/transférée de différentes séries de mesures, et la somme d'un temps de flux de blocs inactif et actif pour lesdites séries de mesure pour obtenir ledit rapport.

**27.** Produit de programme informatique pour une utilisation avec un système informatique dans un système de communication, dans lequel le système de communication comprend un réseau de communication orienté paquet où une station de base est agencée pour couvrir une cellule, et une station mobile qui peut communiquer sans fil avec ladite station de base dans ladite cellule pour la transmission de paquets de données dans un flux de blocs temporaire, et où ledit produit de programme informatique comprend un support de stockage, **caractérisé par** des dispositifs, stockés sur ledit support de stockage, pour commander le système informatique pour effectuer chacune des étapes du procédé tel que revendiqué dans les revendications 15 à 26.

```
                        ┌─────────────────────┐
                        │    1. START         │
                        └──────────┬──────────┘
                                   │
                                   ▼
                        ┌─────────────────────┐
                        │    2. i := 0        │
                        └──────────┬──────────┘
                                   │
                                   ▼
                        ┌─────────────────────┐
                        │    3. TBF start     │
                        └──────────┬──────────┘
                                   │
                                   ▼
                        ┌─────────────────────┐        ┌─────────────────────┐
                        │    4. Ta[i] start   │- - - -▷│    5. D[i] start    │
                        └──────────┬──────────┘        └─────────────────────┘
                                   │
                                   ▼
                        ┌─────────────────────┐
                        │    6. TBF stop      │
                        └──────────┬──────────┘
                                   │
                                   ▼
                        ┌─────────────────────┐        ┌─────────────────────┐
                        │ 7. Ta[i] stop and   │- - - -▷│ 8. D[i] stop and    │
                        │    store            │        │    store            │
                        └──────────┬──────────┘        └─────────────────────┘
                                   │
                                   ▼                        Other
                        ┌─────────────────────┐
                        │  9. Why stop TBF?   │──────────────────┐
                        └──────────┬──────────┘                  │
                            Change of cell                       │
                                   │                             ▼
                        ┌─────────────────────┐  Yes   ┌─────────────────────┐
                        │  10. All packets    │───────▷│   11. Ti[i] := 0    │
                        │ transmitted/transferred ?    └─────────────────────┘
                        └──────────┬──────────┘
                              No    │
                                   ▼
                        ┌─────────────────────┐
                        │   12. Ti[i] start   │
                        └──────────┬──────────┘
                                   │
                                   ▼
                        ┌─────────────────────┐
                        │   13. TBF start     │◁───────────────────┘
                        └──────────┬──────────┘
                                   │
                                   ▼
                        ┌─────────────────────┐
                        │ 14. Ti[i] stop and  │
                        │     store           │
                        └──────────┬──────────┘
                                   │
      ┌──────────────┐      No     ▼
      │ 16. i := i+1 │◁─────┌─────────────────────────────┐
      └──────────────┘      │ 15. External condition      │
                            │     fulfilled?              │
                            └──────────────┬──────────────┘
                                        Yes │
                                           ▼
                        ┌─────────────────────┐
                        │  17. Calculate ratio│
                        └──────────┬──────────┘
                                   │
                                   ▼
                        ┌─────────────────────┐
                        │    18. END          │
                        └─────────────────────┘
```

# Figure 1

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6021117 A